(19) Europäisches Patentamt
European Patent Office
Office européen des brevets

(11) **EP 4 765 852 A1**

(12) **EUROPEAN PATENT APPLICATION**

(43) Date of publication:
24.06.2026 Bulletin 2026/26

(21) Application number: 25224221.9

(22) Date of filing: 17.12.2025

(51) International Patent Classification (IPC):
*H04N 25/534* (2023.01)      *H04N 25/773* (2023.01)

(52) Cooperative Patent Classification (CPC):
H04N 25/534; H04N 25/773

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH LA MA MD TN

(30) Priority: 20.12.2024 JP 2024224652

(71) Applicant: Canon Kabushiki Kaisha
Tokyo, 146-8501 (JP)

(72) Inventor: HOSONO, Suguru
Tokyo, 146-8501 (JP)

(74) Representative: TBK
Bavariaring 4-6
80336 München (DE)

(54) **CONVERSION DEVICE, CONVERSION METHOD, AND COMPUTER PROGRAM**

(57)    A conversion device includes conversion elements respectively having avalanche photodiodes that receive light corresponding to respective colors of a plurality of color filters, and counters that count and output the number of output signals from the avalanche photodiodes. Recharge cycles of the avalanche photodiodes corresponding to the respective colors are made different for each color.

**FIG. 5**

**Description**

BACKGROUND

TECHNICAL FIELD

The aspect of the embodiments relates to a conversion device, a conversion method, a computer program, and the like.

BACKGROUND

Recently, a photoelectric conversion element which digitally counts the number of photons arriving at an avalanche photodiode (APD) and outputs count values from pixels as photoelectrically converted digital signals has been proposed.

Japanese Patent Laid-Open No. 2020-123847 describes a photoelectric conversion device capable of favorably detecting the number of periods during which avalanche multiplication has occurred by controlling a recharging timing of an APD using pulse signals.

In the photoelectric conversion device of Japanese Patent Laid-Open No. 2020-123847, photons can be counted one by one for each cycle of a pulse generated by a pulse generation circuit. In the case of using this technique, count omissions occur when a plurality of photons are incident in one pulse cycle.

However, when images of ordinary stationary light are being captured, an influence of count omissions can be reduced through correction processing by statistically estimating the number of incident photons in one pulse cycle.

Meanwhile, under an environment where a light source flashing within one frame, particularly an LED light source using a pulse modulation-type drive method, is used as illumination, many count omissions occur compared to when stationary light is used. For this reason, the accuracy of count omission correction processing deteriorates, and the color tone changes compared to that in the actual environment.

SUMMARY

A conversion device according to an aspect of the embodiments includes conversion elements respectively having avalanche photodiodes that receive light corresponding to respective colors of a plurality of color filters, and counters that count and output the number of output signals from the avalanche photodiodes. Recharge cycles of the avalanche photodiodes corresponding to the respective colors are made different for each color.

Further features of the disclosure will become apparent from the following description of embodiments with reference to the attached drawings.

BRIEF DESCRIPTION OF THE DRAWINGS

Fig. 1 is a view showing an example of a constitution of a photoelectric conversion element 100 according to First Embodiment of the disclosure.
Fig. 2 is a view showing an example of a constitution of a sensor board 11 according to First Embodiment.
Fig. 3 is a view showing an example of a constitution of a circuit board 21 according to First Embodiment.
Fig. 4 is a view showing an example of a pixel 101 according to First Embodiment and an equivalent circuit of a signal processing circuit 103 corresponding to the pixel 101.
Fig. 5 is an explanatory view of an example of connection between pixels of the photoelectric conversion element and a control signal CLK according to First Embodiment.
Fig. 6 is an explanatory timing chart of the photoelectric conversion element of First Embodiment.
Fig. 7A is an explanatory view of a counting operation when stationary light is used as illumination.
Fig. 7B is an explanatory view of a counting operation when a light source flashing over time is used as illumination.
Fig. 7C is an explanatory view of illumination intensities in attention regions when there are light sources moving within one frame.
Fig. 8 is an explanatory view of an example of a photoelectric conversion method according to First Embodiment.
Fig. 9 is a flowchart showing an example of control when a color tone abnormality occurs in a flashing light source of a subject in the photoelectric conversion method according to First Embodiment.
Fig. 10A is a view showing an example of a captured image according to Third Embodiment, and Fig. 10B is an explanatory view of a sensor region according to Third Embodiment.
Fig. 11 is a view showing an example of connection between each pixel and a control signal CLK circuit of a photoelectric conversion element according to Third Embodiment.
Fig. 12 is a view showing an example of a method for supplying the control signal CLK when a pixel region of the photoelectric conversion element according to Third Embodiment is divided into two.
Fig. 13 is a flowchart showing an example of control of a photoelectric conversion method in a photoelectric conversion device according to Fourth Embodiment.
Fig. 14 is a functional block diagram showing an example of a constitution of the photoelectric conversion device using the photoelectric conversion elements of First to Fourth Embodiments.

DESCRIPTION OF THE EMBODIMENTS

Hereinafter, embodiments of the disclosure will be described with reference to the drawings. However, the disclosure is not limited to the following embodiments. In each drawing, the same reference signs are applied to the same members or elements, and duplicate description will be omitted or simplified.

<First Embodiment>

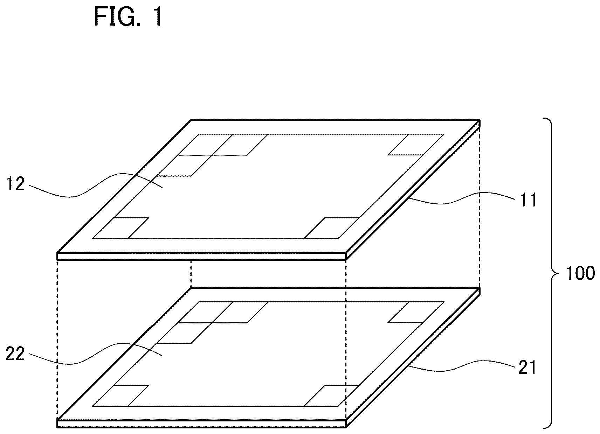

Fig. 1 is a view showing an example of a constitution of a photoelectric conversion element 100 according to First Embodiment of the disclosure. A sensor board 11 includes a pixel region 12, and a circuit board 21 includes a circuit region 22 for processing a signal detected in the pixel region 12.

In this Embodiment, an example of a photoelectric conversion device having a so-called laminated structure, in which the photoelectric conversion element 100 is constituted of two boards (the sensor board 11 and the circuit board 21) that are laminated and electrically connected, will be described. However, a so-called non-laminated structure, in which a constitution included in a sensor board and a constitution included in a circuit board are disposed on a common semiconductor layer, may be adopted.

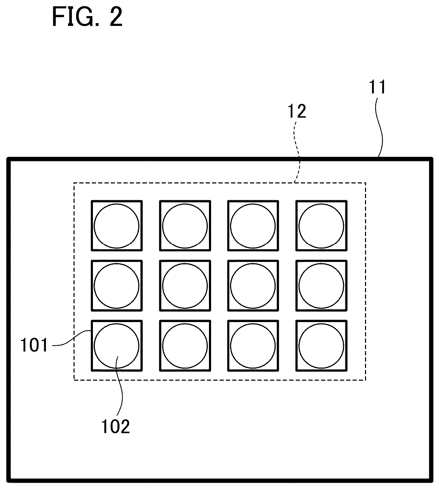

Fig. 2 is a view showing an example of a constitution of the sensor board 11 according to First Embodiment. The pixel region 12 of the sensor board 11 includes a plurality of pixels 101 which are disposed two-dimensionally in directions across a plurality of rows and columns. The pixel 101 is provided with a photoelectric conversion unit 102 including an avalanche photodiode (hereinafter, an APD). The numbers of rows and columns of a pixel array forming the pixel region 12 are not particularly limited.

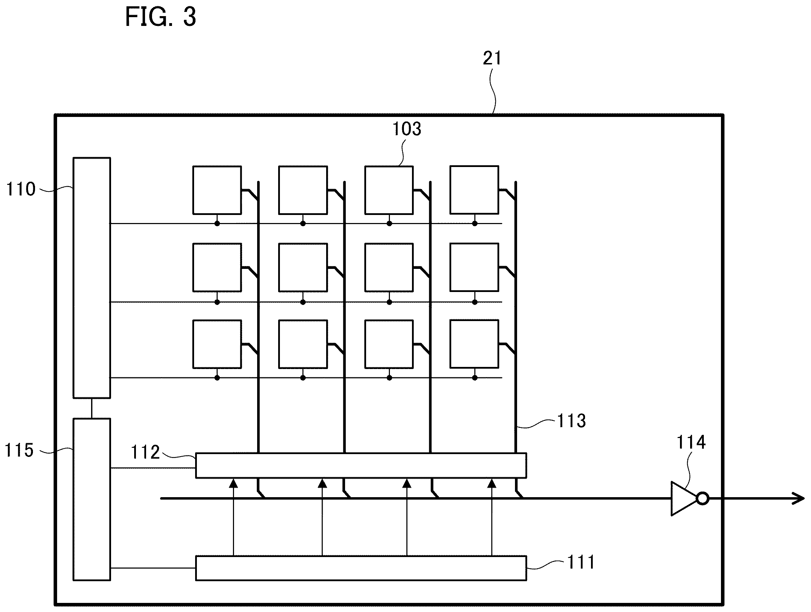

Fig. 3 is a view showing an example of a constitution of the circuit board 21 according to First Embodiment. The circuit board 21 has signal processing circuits 103, which perform processing of electric charge photoelectrically converted by the photoelectric conversion units 102 in Fig. 2, a reading circuit 112, a control pulse generation unit 115, a horizontal scanning circuit 111, signal lines 113, and a vertical scanning circuit 110.

The vertical scanning circuit 110 receives a control pulse supplied from the control pulse generation unit 115 and supplies a plurality of kinds of control pulses to each pixel. A logic circuit such as a shift register or an address decoder is used as the vertical scanning circuit 110.

A signal output from the photoelectric conversion unit 102 of the pixel is processed by the signal processing circuit 103. The signal processing circuit 103 is provided with a counter, a memory, and the like, and the memory retains digital values. In order to read a signal from the memory of each pixel retaining digital signals, the horizontal scanning circuit 111 inputs a control pulse to the signal processing circuits 103 to sequentially select each column.

In the column which has been selected, a signal is output to the signal line 113 from the signal processing circuit 103 of the pixel selected by the vertical scanning circuit 110. A signal output from the signal line 113 is output to the outside of the photoelectric conversion element 100 via an output circuit 114.

As shown in Figs. 2 and 3, a plurality of signal processing circuits 103 are disposed in a region, in a plan view, overlapping the pixel region 12. Further, in a plan view, the vertical scanning circuit 110, the horizontal scanning circuit 111, the reading circuit 112, the output circuit 114, and the control pulse generation unit 115 are disposed in an overlapping manner between an end of the sensor board 11 and an end of the pixel region 12.

In other words, the sensor board 11 has the pixel region 12 and a non-pixel region disposed around the pixel region 12. Further, the vertical scanning circuit 110, the horizontal scanning circuit 111, the reading circuit 112, the output circuit 114, and the control pulse generation unit 115 are disposed in a region overlapping the non-pixel region in a plan view.

Disposition of the signal lines 113 and disposition of the reading circuit 112 and the output circuit 114 are not limited to those in Fig. 3. For example, the signal lines 113 may be disposed in a manner of extending in the row direction, and the reading circuit 112 may be disposed at an end to which the signal lines 113 extend.

In addition, regarding the function of the signal processing unit, it is not necessary to provide one signal processing unit for each of all the photoelectric conversion units, and a constitution in which one signal processing unit is shared by a plurality of photoelectric conversion units and signal processing is performed sequentially may be adopted.

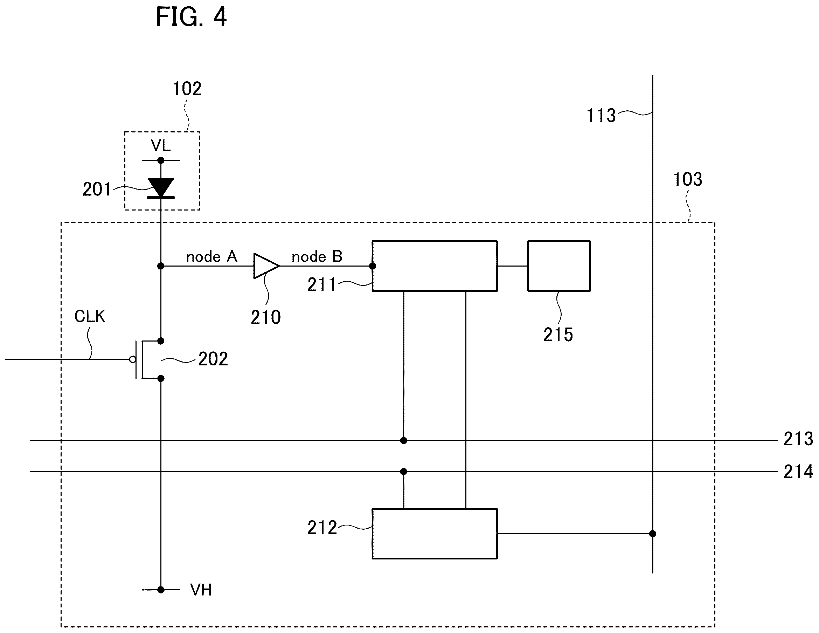

Fig. 4 is a view showing an example of the pixel 101 according to First Embodiment and an equivalent circuit of the signal processing circuit 103 corresponding to the pixel 101.

An APD 201 generates electric charge pairs in response to incident light through photoelectric conversion. One of two nodes of the APD 201 is connected to a power supply line to which a drive voltage VL (first voltage) is supplied.

In addition, the other of the two nodes of the APD 201 can be connected to a power supply line, to which a drive voltage VH (second voltage) higher than the voltage VL is supplied, via a switch 202. In Fig. 4, one node of the APD 201 is an anode, and the other node of the APD is a cathode.

A reverse bias voltage causing the APD 201 to perform an avalanche multiplication operation is supplied to the anode and the cathode of the APD 201. In a state in which such a voltage is supplied, electric charge generated by incident light causes avalanche multiplication so that an avalanche current is generated.

When a reverse bias voltage is supplied, there are a Geiger mode operated by a voltage difference between the anode and the cathode larger than a breakdown voltage, and a linear mode operated by a voltage difference between the anode and the cathode closer to or smaller than the breakdown voltage. An APD operating in the Geiger mode will be referred to as an SPAD. In the case of the SPAD, for example, the voltage VL (first voltage) is -30 V, and the voltage VH (second voltage) is 1 V.

The switch 202 is connected to the power supply line to which the drive voltage VH is supplied, and one node of the anode and the cathode of the APD 201. Further, the switch 202 switches a resistance value between the APD 201 and the power supply line to which the drive voltage VH is supplied.

That is, the switch 202 is connected to one node of the anode and the cathode of the avalanche photodiode and the power supply line to which a drive voltage is applied, and switches the resistance value between one node and the power supply line.

In one embodiment, in switching the resistance value, the resistance value is changed by ten times or greater, and the resistance value is changed by a hundred times or greater. Hereinafter, a decrease in the resistance value will be referred to as the switch 202 being turned on, and an increase in the resistance value will be referred to as the switch 202 being turned off.

The switch 202 functions as a quench element. That is, the switch 202 functions as a load circuit (quench circuit) at the time of signal multiplication through avalanche multiplication and performs a quench operation of restraining avalanche multiplication by restraining a voltage supplied to the APD 201.

In addition, the switch 202 performs a recharging operation of returning the voltage supplied to the APD 201 to the drive voltage VH by causing a current to flow by an amount corresponding to the voltage drop in a quench operation. The switch 202 can be constituted of a MOS transistor, and Fig. 4 shows a case in which the switch 202 is a PMOS transistor.

A control signal CLK for controlling the switch 202 is applied from a control signal CLK circuit (which will be described below) to a gate electrode of the MOS transistor constituting the switch 202. The recharge cycle of the avalanche photodiode is controlled by controlling the voltage applied to the gate electrode of the switch 202 to control ON and OFF of the switch 202.

The signal processing circuit 103 includes a waveform shaping unit 210, a counter circuit 211, and a selection circuit 212. In one embodiment, the signal processing circuit 103 need only include at least any one of the waveform shaping unit 210, the counter circuit 211, and the selection circuit 212.

The waveform shaping unit 210 outputs pulse signals by shaping the voltage change in the cathode of the APD 201 obtained when photons are detected. For example, an inverter circuit is used as the waveform shaping unit 210. A circuit in which a plurality of inverters are connected in series may be used as the inverter circuit, or other circuits having a waveform shaping effect may be used.

The counter circuit 211 counts pulse signals output from the waveform shaping unit 210 and retains the count value. In addition, when a control pulse RES is supplied via a drive line 213, signals retained in the counter circuit 211 are reset.

A saturation judgment unit 215 judging saturation of the number of output signals measured by the counter circuit is connected to the counter circuit 211. When the number of output signals measured by the counter circuit 211 reaches the saturation judgment count number, the saturation judgment unit 215 stops counting up pulse signals by the counter circuit and causes the saturation judgment count number to be maintained in the counter circuit 211 as a count value.

In the photoelectric conversion element of this Embodiment, the control signal CLK is supplied from the control signal CLK circuit to the switch 202, and therefore it is possible to perform control such that the saturation judgment count number becomes smaller than the maximum number of times of recharging determined by a quotient obtained by dividing the exposure time of the APD by the recharge cycle.

By controlling the saturation judgment count number as described above with the saturation judgment unit 215, it is possible to provide a photoelectric conversion device capable of restraining change in color tone even under an environment where a flashing light source is used as illumination light.

In this Embodiment, the control signal CLK of the switch 202 sets the recharge cycle for each color of the color filters of the pixels. That is, the recharge cycle can be controlled for each color by setting the frequency of the control signal CLK for each color. Details will be described below.

A control pulse SEL is supplied to the selection circuit 212 from the vertical scanning circuit 110 in Fig. 3 via a drive line 214 in Fig. 4 (not shown in Fig. 3), thereby switching electrical connection and disconnection between the counter circuit 211 and the signal line 113. Examples of the selection circuit 212 include a buffer circuit for outputting a signal.

An output signal OUT shown in Fig. 4 is an output signal (pixel output), and the count value of the counter circuit 211 is output. That is, the counter circuit 211 functions as a counter counting and outputting the number of output signals from the avalanche photodiode until the number reaches the saturation judgment count number.

A switch such as a transistor may be disposed between the switch 202 serving as a quench element and the APD 201 or between the photoelectric conversion unit 102 and the signal processing circuit 103 to switch electrical connection. Similarly, supply of the voltage VH or the voltage VL supplied to the photoelectric conversion unit 102 may be electrically switched using a switch such as a transistor.

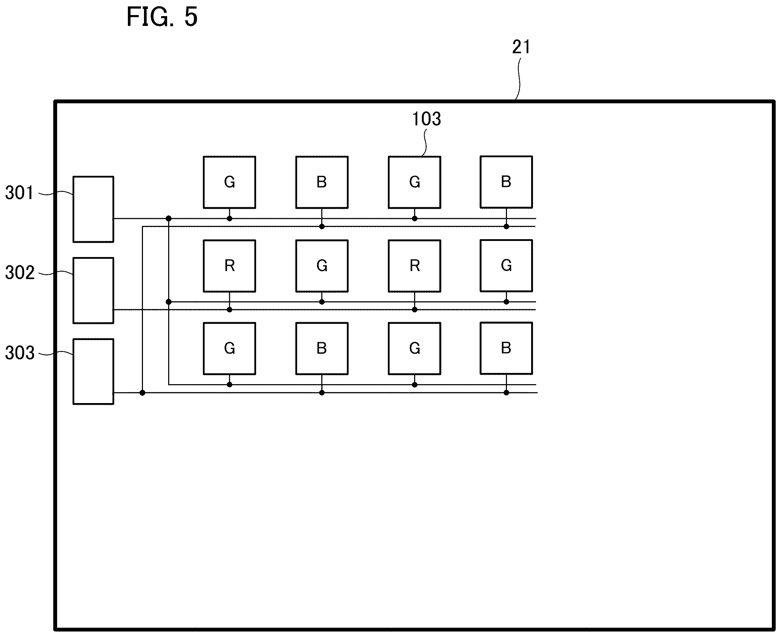

Fig. 5 is an explanatory view of an example of connection between pixels of the photoelectric conversion element and the control signal CLK according to First Embodiment. In Fig. 5, a case in which color filters of a plurality of colors in an RGB Bayer arrangement are mounted is considered. That is, each pixel receives light through one of the R (red), G (green), and B (blue) color filters. In addition, the avalanche photodiode of each pixel receives light corresponding to each color of the color filters.

Here, pixels receiving light through the respective R, G, and B color filters are referred to as R pixels, G pixels, and B pixels. The reference signs 301, 302, and 303 indicate the control signal CLK circuits serving as signal generation units. The control signal CLK is supplied to each of the R pixels, the G pixels, and the B pixels from the control signal CLK circuits 301, 302, and 303.

In this Embodiment, a plurality of signal generation units for supplying respective control signals of the recharge cycles to the avalanche photodiodes corresponding to the respective colors of the color filters are provided. The control signal CLK circuits 301, 302, and 303 may be provided inside the vertical scanning circuit 110 or may be provided outside the vertical scanning circuit 110.

That is, the control signal CLK circuits 301, 302, and 303 are circuits for the R pixels, the G pixels, and the B pixels, respectively. The frequency of each control signal CLK is variable, and the control signal CLK having a different frequency can be supplied for each color of the color filters of the pixels.

A method for supplying the control signal CLK is not limited to the foregoing method. The control signal CLK may be created using an IC inside the photoelectric conversion device or may be input from the outside of the photoelectric conversion device. Two or more control signals CLK having different frequencies may be provided, and the frequency to be supplied to one of the R pixels, the G pixels, and the B pixels from the control signals CLK may be switched using a switch.

In addition, the color filters are not limited to the RGB Bayer arrangement. The control signal CLK may be connected for each color of the color filters in a similar manner in other color filters such as RCCB and RGCB. Here, C denotes a transparent color filter.

It is possible to perform a quench operation and a recharging operation using the switch 202 in response to avalanche multiplication in the APD 201. However, it may not be judged as an output signal depending on the timing of detecting photons.

For example, it is assumed that avalanche multiplication occurs in the APD, an input voltage to a node nodeA is caused to be at a low level, and a recharging operation is performed. Generally, the judgment threshold of the waveform shaping unit 210 is set to a voltage higher than the voltage difference causing avalanche multiplication in the APD.

If photons are incident when the voltage of the node nodeA is in a state of being lower than the judgment threshold due to a recharging operation and is a voltage allowing avalanche multiplication in the APD, avalanche multiplication occurs in the APD and the voltage of the nodeA drops.

Namely, since the voltage of the nodeA drops when it becomes a voltage lower than the judgment threshold, even though photons are detected, the output voltage from a node nodeB does not change. Therefore, even though avalanche multiplication occurs, they are not judged as signals.

Particularly, since photons enter continuously in a short period under high illumination, they are less likely to be judged as signals. Accordingly, even though the illumination is high, the actual number of incident photons and the output signals are likely to be discrepant from each other.

In contrast, in this Embodiment, the switch 202 is switched between ON and OFF by applying the control signal CLK to the switch 202, and therefore they can be judged as signals even when photons continuously enter the APD in a short period of time.

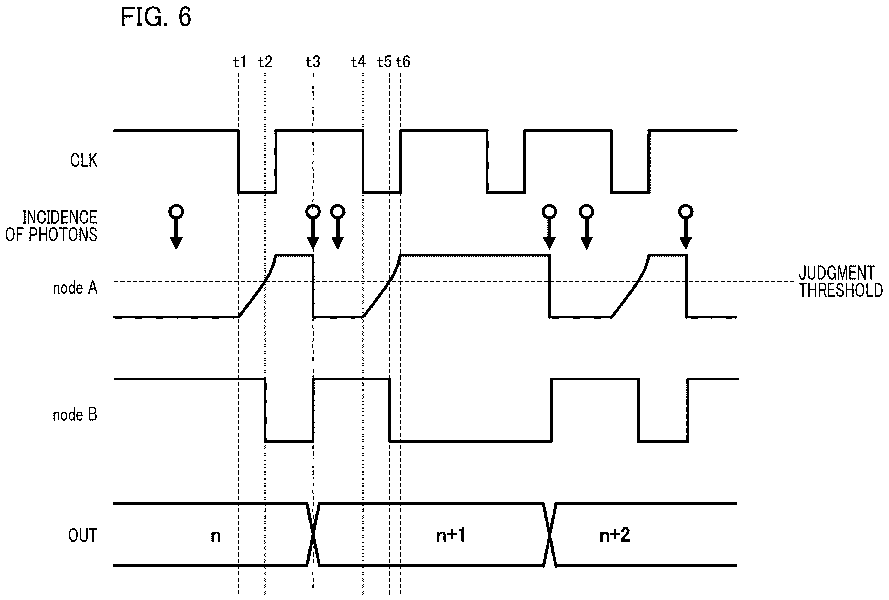

Fig. 6 is an explanatory timing chart of a photoelectric conversion element of First Embodiment schematically showing a relationship between the control signal CLK of the switch, the voltage of the node nodeA, the voltage of the node nodeB, and the output signals. Fig. 6 shows a case in which the control signal CLK is a pulse signal having a constant repetition cycle.

In the photoelectric conversion device of this Embodiment, when the control signal CLK is at a high level, the drive voltage VH is in a state of being less likely to be supplied to the APD, and when the control signal CLK is at a low level, the drive voltage VH is in a state of being supplied to the APD. The high level of the control signal CLK is 1 V, for example, and the low level of the control signal CLK is 0 V, for example.

The switch 202 is turned off when the control signal CLK is at the high level, and the switch 202 is turned on when the control signal CLK is at the low level. The resistance value of the switch 202 when the control signal CLK is at the high level is higher than the resistance value of the switch 202 when the control signal CLK is at the low level.

When the control signal CLK is at the high level, since a recharging operation is less likely to be performed even if avalanche multiplication occurs in the APD, the voltage supplied to the APD becomes a voltage equal to or lower than the breakdown voltage of the APD. Therefore, an avalanche multiplication operation in the APD stops.

At a time t1, the control signal CLK changes from the high level to the low level, the switch 202 is turned on, and a recharging operation of the APD starts. Accordingly, the voltage of the cathode of the APD shifts to the high level.

Further, the voltage difference between the voltages applied to the anode and the cathode of the APD is in a state allowing avalanche multiplication. The voltage of the cathode is the same as that of the node nodeA. Therefore, when the voltage of the cathode shifts to the high level from the low level, the voltage of the node nodeA becomes equal to or higher than the judgment threshold at a time t2.

At this time, pulse signals output from the node nodeB are inverted and shift to the low level from the high level. When recharging is completed, the APD 201 is in a state in which the voltage difference between the drive voltage VH and the drive voltage VL is applied. Thereafter, the control signal CLK is at the high level, and the switch 202 is turned off.

Next, at a time t3, when photons are incident on the APD 201, avalanche multiplication occurs in the APD 201, an avalanche multiplication current flows in the switch 202, and the voltage of the cathode drops. Namely, the voltage of the node nodeA drops.

If the voltage of the nodeA becomes lower than the judgment threshold while the voltage of the node nodeA is dropping, the voltage of the node nodeB changes from the low level to the high level. Namely, a part whose output waveform exceeds the judgment threshold in the node nodeA is subjected to waveform shaping by the waveform shaping unit 210 and output as signals in the nodeB. Further, they are counted by the counter circuit, and the count value of counter signals output from the counter circuit increases by an amount corresponding to 1 LSB.

Photons are incident on the APD between the time t3 and a time t4, but the switch 202 is in an OFF state, and the voltage applied to the APD 201 does not meet the voltage difference allowing avalanche multiplication. Therefore, the voltage level of the node nodeA does not exceed the judgment threshold.

At the time t4, the control signal CLK changes from the high level to the low level, and the switch 202 is turned on. Consequently, a current compensating for an amount corresponding to the voltage drop from the drive voltage VL flows in the node nodeA, and the voltage of the node nodeA shifts to the original voltage level. At this time, since the voltage of the node nodeA becomes equal to or higher than the judgment threshold at a time t5, pulse signal at the node nodeB is inverted and changes from the high level to the low level.

At a time t6, the node nodeA settles to the original voltage level, and the control signal CLK changes from the low level to the high level. Hereinafter, as described for the period from the time t1 to the time t6, the voltages of the nodes, the signal lines, and the like change in response to the control signal CLK or incidence of photons. In this manner, the frequency of recharging the APD can be controlled by applying the control signal CLK to the switch 202 to switch the switch 202 between ON and OFF.

When the control signal CLK is not used, in one embodiment, an issue may arise in which the actual count value becomes smaller than the count value corresponding to the brightness of incident light under high-brightness conditions. However, this issue can be resolved by applying the control signal CLK to the switch 202 to switch between ON and OFF of the switch 202.

However, in the case of controlling the frequency of recharging the APD by the control signal CLK, count omissions occur when a plurality of photons are incident in one pulse cycle. For this reason, the relationship between the number of input signals and the number of output signals is not linear.

When images of ordinary stationary light are captured, the relationship between the number of input signals and the number of output signals can be theoretically derived from a statistical distribution of the number of incident photons. Specifically, when the number of input signals of the counter is Nph, the number of output signals is Nct, the recharge cycle of the control signal CLK is T, and the length of the exposure period of the avalanche photodiode is t, the following Expression 1 is established.

$$\mathrm{Nct} = \frac{t}{T}\left(1 - e^{-\frac{t}{T}Nph}\right)$$

.... (Expression 1)

Therefore, in this Embodiment, the number of incident photons in one pulse cycle is statistically estimated from the number of output signals Nct using the following Expression 2. Accordingly, an influence of count omissions can be recovered by correction processing in a signal processing unit 804 (which will be described below). That is, correction of nonlinearity of the number of output signals Nct in the counter circuit can be realized by the signal processing unit 804 performing the processing of Expression 2.

$$\mathrm{Nph} = -\frac{t}{T} \times \ln\left(\frac{1 - Nct}{\frac{t}{T}}\right)$$

.... (Expression 2)

Meanwhile, under an environment where a light source flashing within one frame, particularly an LED light source using a pulse modulation-type drive method, is used as illumination, many count omissions occur compared to when stationary light is used. For this reason, the accuracy of count omission correction processing deteriorates, and the color tone changes compared to that in the actual environment.

In contrast, in this Embodiment, count omissions are restrained by shortening the recharge cycles of the pixels where count omissions occur. Accordingly, it is possible to provide a photoelectric conversion element capable of restraining change in color tone even under an environment where a flashing light source is used as illumination.

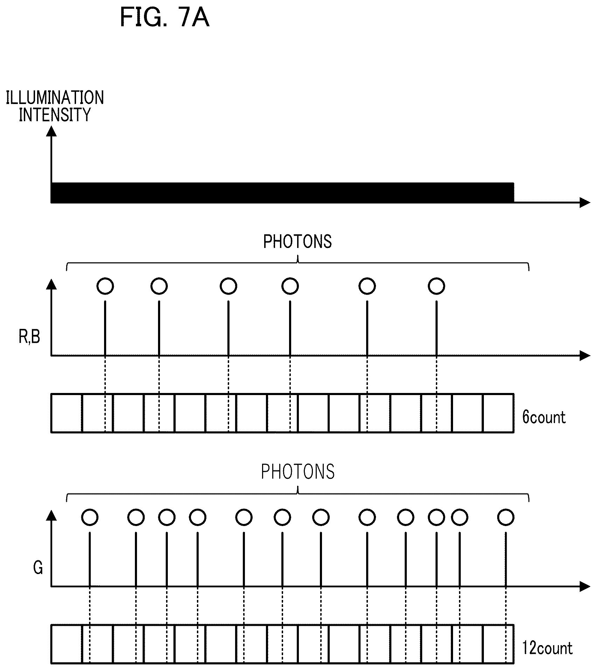

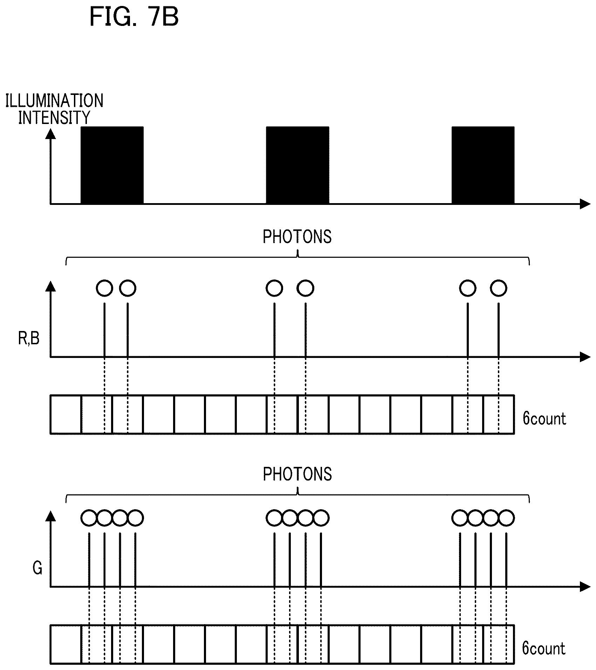

Using Figs. 7A and 7B, the reason for occurrence of change in color tone when a photoelectric conversion element in the related art is used under an environment where a flashing light source is used as illumination will be described. Fig. 7A is an explanatory view of a counting operation when stationary light is used as illumination.

Fig. 7B is an explanatory view of a counting operation when a light source flashing over time is used as illumination, and is an explanatory view showing the reason for occurrence of change in color tone when a photoelectric conversion element in the related art is used under an environment where a flashing light source is used as illumination.

As described above, Figs. 7A and 7B show an example in which photoelectric conversion elements having an on-chip color filter in a so-called RGB Bayer arrangement are used as the photoelectric conversion elements. In addition, a case of using white light as illumination such that the numbers of incident photons per unit time on R pixels : G pixels : B pixels become 1:2:1 will be described as an example.

As shown in Fig. 7A, when stationary light having a constant illumination intensity is incident, since the numbers of incident photons during the respective recharge cycles in the pixels of R, G, and B are small, there are few count omissions in each recharge cycle.

On the other hand, as shown in Fig. 7B, when a flashing light source having a discrete illumination intensity is used as illumination light, since photons are concentrated and incident during a particular recharge cycle, count omissions increase. That is, when rays of light having different numbers of incident photons per unit time on R pixels : G pixels : B pixels are used, many count omissions occur in the pixel of a particular color (G in Fig. 7B).

Accordingly, the balance between the numbers of counts in R pixels : G pixels : B pixels is disrupted so that the color tone changes. For example, in the example of Fig. 7B, as a result of many count omissions which have occurred in the G pixels, the color tone changes in the direction of magenta.

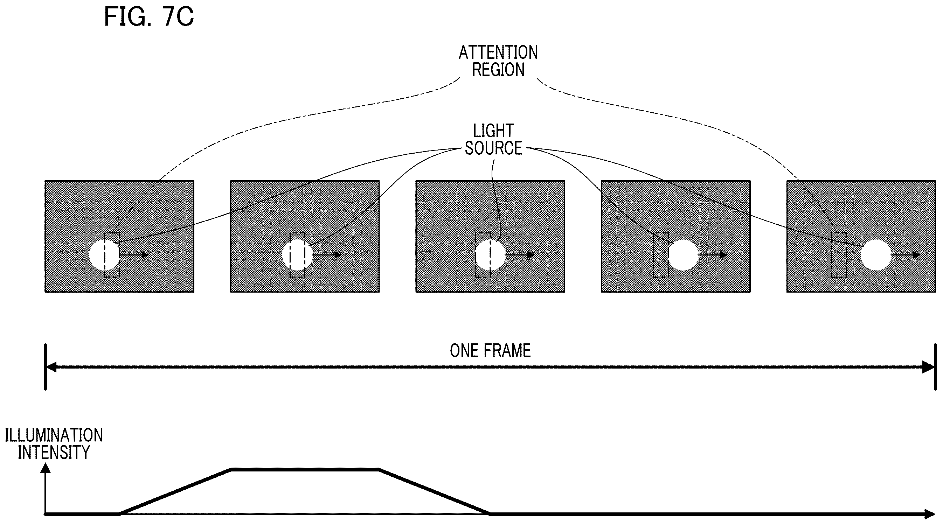

Fig. 7B shows a case in which a flashing light source is used as illumination light. However, similarly, count omissions occur even when a moving light source is used as illumination light. Fig. 7C is an explanatory view of illumination intensities in attention regions when there are light sources moving within one frame.

From Fig. 7C, in the attention regions, it can be seen that there are moments when the illumination intensity is strong and moments when the illumination intensity is weak within one frame. Therefore, similarly to the case in which a flashing light source is used as illumination light, photons are intensively incident in a particular recharge cycle. As a result, count omissions increase.

In contrast, in the photoelectric conversion element of this Embodiment, the recharge cycle is controlled for each color of the color filter of the pixels. When a photon arrival interval is td and the recharge cycle is T, count omissions are less likely to occur when td > T, and count omissions are likely to occur when td < T. However, with a flashing light source described above, the photon arrival interval td changes over time.

When the light source is turned on, td becomes short, and when it is turned off, td becomes long. In order to restrain count omissions, it is effective to set the recharge cycle T shorter than the photon arrival interval td when the light source is turned on. Therefore, in this Embodiment, change in color tone is restrained by controlling the recharge cycle for each color of the color filter of the pixels.

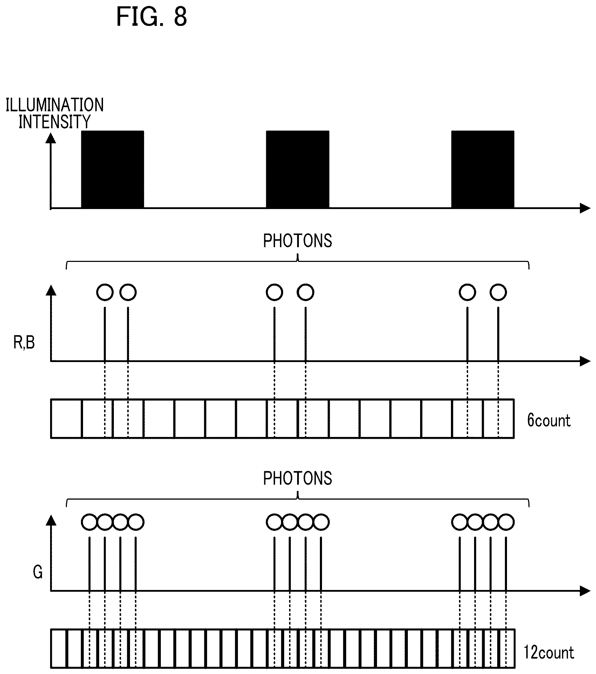

Fig. 8 is an explanatory view of an example of a photoelectric conversion method according to First Embodiment, and a method for restraining count omissions in the G pixels which have occurred in Fig. 7B is described using Fig. 8. Fig. 8 shows an example in which the recharge cycle of the G pixels is set to 1/2 of the recharge cycles of the R pixels and the B pixels. In the example of Fig. 8, the recharge cycles of the avalanche photodiodes corresponding to red and blue are the same, but they do not have to be the same.

In this manner, in one embodiment, the recharge cycle of the avalanche photodiode corresponding to the green color filter is equal to or shorter than 1/2 of the recharge cycles of the avalanche photodiodes corresponding to the red and blue color filters.

In Fig. 7B, twelve photons are incident, but since a plurality of photons are incident within the recharge cycle, count omissions occur and six photons are counted. In contrast, as shown in Fig. 8, by halving the recharge cycle of the G pixels, count omissions can be reduced and the number of incident photons can be accurately counted.

In Fig. 8, the recharge cycle is changed by changing the frequency of the control signal CLK for each color, but the recharge cycle may be changed by masking some of the control signals CLK. That is, the recharge cycle may be controlled by masking some of the control signals. The cycle of the unmasked control signal CLK corresponds to the recharge cycle T.

Moreover, the recharge cycle T may be changed by keeping the control signal CLK in an ON state, that is, by fixing its logic. That is, the maximum number of times of recharging may be controlled by fixing the logic of the switch 202. In this case, the recharge cycle T is not determined based on the cycle of the control signal CLK (=zero), but it becomes a cycle determined based on analog characteristics of the peripheral circuits of the APD.

The photoelectric conversion element shown in First Embodiment is an embodiment for restraining change in color tone when an image of the flashing light source is captured. In other words, in this Embodiment, count omissions in pixels where the count omissions occur are restrained and change in color tone is restrained by controlling the recharge cycle for each color of the color filter.

As described above, since the ratio of the numbers of photons (R:G:B) in the white light source is 1:2:1, the number of incident photons on the G pixels becomes approximately twice those of the R pixels and the B pixels. Count omissions are more likely to occur in the G pixels having a larger number of incident photons than the R pixels and the B pixels.

As described above, if count omissions occur in the G pixels, the number of counts becomes smaller than the actual number of incident photons, and therefore R and B become relatively strong so that white changes to magenta. Hence, in this Embodiment, in order to restrain the change in color tone, the recharge cycle of the G pixels where count omissions occur is shortened. Particularly, in order to restrain power consumption, it is desirable to shorten only the recharge cycle of the G pixels and keep the same recharge cycle for the R and B pixels.

For example, regarding the recharge cycle of each color filter of the pixels, the recharge cycle of the R pixels will be regarded as TR, the recharge cycle of the G pixels will be regarded as TG, and the recharge cycle of the B pixels will be regarded as TB. In this case, the recharge cycle is controlled such that the recharge cycle of the G pixels becomes the shortest with respect to the R and B pixels, that is, TG < TR and TG < TB are established.

In this case, since the number of photons of the white light source of G is approximately twice those of R and B, the recharge cycle of the G pixels is shorten to 1/2. However, the recharge cycle is not limited to this value, and there is an effect of restraining the change in color tone even if it is shorter or longer than 1/2.

A first drive mode in which the recharge cycle is shortened and a second drive mode in which the recharge cycle is not shortened may be provided, and switching between these modes may be performed. That is, a first drive mode in which the recharge cycle of avalanche photodiodes corresponding to a predetermined color is shortened and a second drive mode in which the recharge cycle is not shortened may be provided, and switching may be performed therebetween.

In this case, the first drive mode can be regarded as a mode prioritizing restraint on power consumption, and the second drive mode can be regarded as a mode prioritizing restraint on change in color tone.

The number of incident photons can be calculated for each color of the color filter using Expression 2 described above. The number of incident photons for each color is calculated by substituting the recharge cycles TR, TG, and TB for respective colors into the recharge cycle T. For example, the number of incident photons for the G pixels can be derived using the following Expression 3.

$$Nph = -\frac{t}{TG} \times \ln\left(\frac{1 - Nct}{\frac{t}{TG}}\right)$$

.... (Expression 3)

Next, restraint on change in color tone due to count omissions in the R pixels and the B pixels will be described. When count omissions occur in the R pixels and the B pixels as well, change in color tone occurs similarly to the G pixels. For example, the color tone changes when count omissions occur in the R pixels and the number of detected photons decreases in light with strong red color such as pink or orange.

Therefore, in this case, regarding the recharge cycles TR, TG, and TB for each color filter of the pixels, the recharge cycles are controlled such that the recharge cycle of the R pixels becomes the shortest, that is, TR < TG and TR < TB are established.

Meanwhile, the color tone also changes when count omissions occur in the B pixels and the number of detected photons decreases in bluish light with strong blue color such as light blue. In this case, the recharge cycle is controlled such that the recharge cycle of the B pixels becomes the shortest, that is, TB < TG and TB < TR are established. Thus, count omissions in the R pixels and the B pixels can be restrained and change in color tone can be restrained by shortening the recharge cycles of the R pixels and the B pixels.

The color for which the recharge cycle should be relatively shortened may be determined based on detection results by providing a count omission detection unit detecting count omissions by detecting change in color tone in a captured image. A photoelectric conversion device provided with a count omission detection unit will be described in Fourth Embodiment.

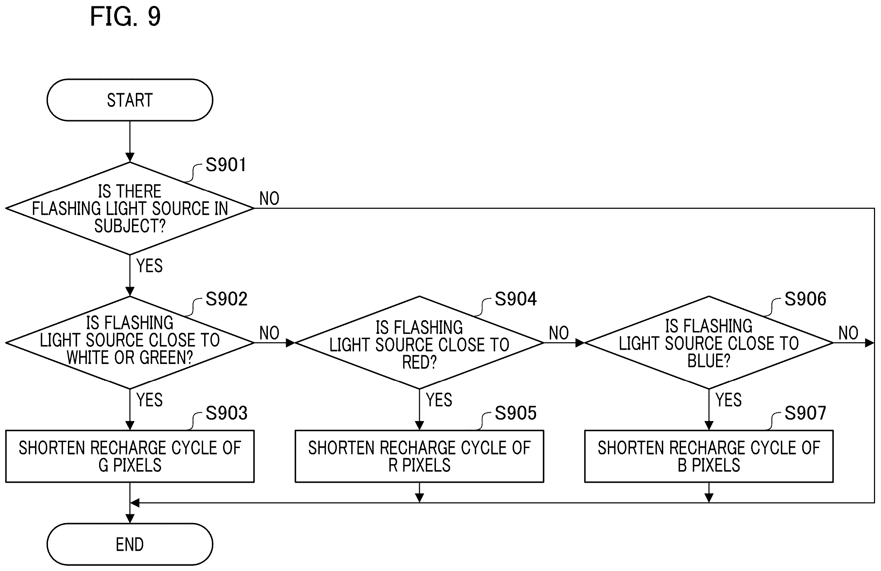

Fig. 9 is a flowchart showing an example of control in the photoelectric conversion method according to First Embodiment performed when a color tone abnormality occurs in the flashing light source of a subject. Operations of respective steps in the flowchart of Fig. 9 are sequentially executed by a CPU or the like serving as a computer in a control unit 801 executing a computer program stored in the memory.

Using Fig. 9, a control method for a case in which a subject includes a flashing light source will be described. First, in Step S901, it is judged whether there is a flashing light source in a subject. If it is judged to be Yes, the processing proceeds to Step S902. If it is judged to be No, the processing flow of Fig. 9 ends. The processing flow of Fig. 9 is executed in a cycle on a frame-period basis, for example.

In Step S902, it is judged whether the flashing light source is close to white or green, that is, it is judged whether the G component is equal to or larger than a predetermined ratio with respect to R and B. When it is judged to be Yes, the processing proceeds to Step S903. When it is judged to be No, the processing proceeds to Step S904.

In Step S903, the recharge cycle of the G pixels is made shorter than the recharge cycles of the R pixels and the B pixels, that is, TG < TR and TG < TB are established. Thereafter, the processing flow of Fig. 9 ends.

In Step S904, it is judged whether the flashing light source is close to red, that is, it is judged whether the R component is equal to or larger than the predetermined ratio with respect to G and B. When it is judged to be Yes in Step S904, the processing proceeds to Step S905. When it is judged to be No, the processing proceeds to Step S906.

In Step S905, the recharge cycle of the R pixels is made shorter than the recharge cycles of the G pixels and the B pixels, that is, TR < TG and TR < TB are established. Thereafter, the processing flow of Fig. 9 ends.

In Step S906, it is judged whether the flashing light source is close to blue, that is, it is judged whether the B component is equal to or larger than the predetermined ratio with respect to R and G. When it is judged to be Yes, the processing proceeds to Step S907. When it is judged to be No, the processing flow of Fig. 9 ends.

In Step S907, the recharge cycle of the B pixels is made shorter than the recharge cycles of the R pixels and the G pixels, that is, TB < TG and TB < TR are established. Thereafter, the processing flow of Fig. 9 ends.

Thus, in Fig. 9, in accordance with the color of the flashing light source, the recharge cycle of the avalanche photodiode corresponding to one of the red, green, and blue color filters is made shorter than the recharge cycles of the avalanche photodiodes corresponding to other colors. Accordingly, change in color tone can be restrained.

An example using a photoelectric conversion element with an RGB Bayer arrangement has been described in the above description, but the color filter includes a prism for separating a plurality of colors. That is, for example, even in a three-plate photoelectric conversion device including a dichroic prism and three photoelectric conversion elements corresponding to R, G, and B, change in color tone in a flashing light source can be restrained by applying the photoelectric conversion device shown in Fig. 9.

<Second Embodiment>

In Second Embodiment, an example in which change in color tone is restrained by controlling the recharge cycle when a photoelectric conversion element including a color filter with a high transmittance (for example, W filter) is used will be described.

A high-transmittance color filter is a color filter which is substantially transparent in a photon detection wavelength range and allows light components of R, G, and B to pass therethrough. In this Embodiment, an example including color filters in an RCB Bayer arrangement will be described, but the arrangement of color filters may be arrangement of RCGB or RCB.

An RCB Bayer refers to a color filter including a transparent color filter (C) in place of the color filter of G in the RGB Bayer. Since the transparent color filter has a higher transmittance than the G color filter, the number of incident photons on the pixels increases so that the sensitivity can be enhanced.

On the other hand, since incident photons increase, count omissions are more likely to occur. Since the transmission band of the color filter of C includes the transmission bands of the R and B color filters, the number of counts of the C pixels is larger than those of the R and B pixels at all times.

For example, the ratio of photons of the white light source is approximately R:C:B=1:4:1. Since the number of counts of the C pixels is larger than those of the R and B pixels at all times, countermeasures against change in color tone can be provided by providing countermeasures against count omissions in the C pixels.

That is, it is unnecessary to shorten the recharge cycles of the R and B pixels as described in First Embodiment. If count omissions occur in the C pixels, the number of counts becomes smaller than the actual number of incident photons, and therefore R and B become relatively strong so that white changes to magenta. In order to restrain the change in color tone, the recharge cycle of the C pixels where count omissions occur is made shorter than the recharge cycles of other colors.

That is, regarding the recharge cycle of each color filter of the pixels, when the recharge cycle of the R pixels is regarded as TR, the recharge cycle of the C pixels is regarded as TC, and the recharge cycle of the B pixels is regarded as TB, the recharge cycle is controlled such that the recharge cycle of the C pixels becomes the shortest, that is, TC < TR and TC < TB are established.

That is, when red, blue, and transparent color filters are provided, the recharge cycle of the avalanche photodiode corresponding to the transparent color filter is made shorter than the recharge cycles of the avalanche photodiodes corresponding to the red and blue color filters.

Thus, in one embodiment, the recharge cycle of the avalanche photodiode corresponding to the transparent color filter is shorter than the recharge cycles of the avalanche photodiodes corresponding to the other color filters.

In this case, regarding the number of photons of the white light source, since C is approximately four times that of R and B, it is effective to shorten the recharge cycle of the C pixels to 1/4. However, the recharge cycle is not limited to this value, and there is an effect of restraining the change in color tone even if it is shorter or longer than 1/4.

In other words, in one embodiment, the recharge cycle of the avalanche photodiode corresponding to the transparent color filter is equal to or shorter than 1/4 of the recharge cycles of the avalanche photodiodes corresponding to red and blue.

The number of incident photons can be calculated for each color of the color filter using Expression 2 described above. The number of incident photons for each color may be calculated by substituting the recharge cycles TR, TC, and TB for respective colors, and the recharge cycles TR, TC, and TB for each color may be set such that the difference between the numbers of incident photons for each color falls within a predetermined range.

<Third Embodiment>

In Third Embodiment, an example in which count omissions are restrained by detecting a flashing light source from an image and controlling the recharge cycle for each color in the region of the flashing light source will be described. In this Embodiment, an object detection unit is provided inside the photoelectric conversion device or outside the photoelectric conversion device.

That is, in Third Embodiment, the object detection unit for detecting a flashing light source is provided, and the recharge cycle of the avalanche photodiode corresponding to a predetermined color in the region of the flashing light source is shortened.

In Third Embodiment, the foregoing object detection unit detects whether there is a flashing light source within a subject. For example, a light source using an LED, which is a flashing light source such as digital signage, is detected. Regarding detection of a flashing light source, it may be detected from the shape of a light source such as digital signage, or the presence of a flashing light source such as an LED light source may be detected by detecting periodic vertical stripes of light and dark generated within a screen due to the flashing of the light source.

The object detection unit performs the foregoing detection processing based on an output image of the photoelectric conversion device. When a user selects a flashing light source or an area exhibiting a color tone abnormality on a screen and transmits this information to the photoelectric conversion device, the selection signal may be received as an object detection signal.

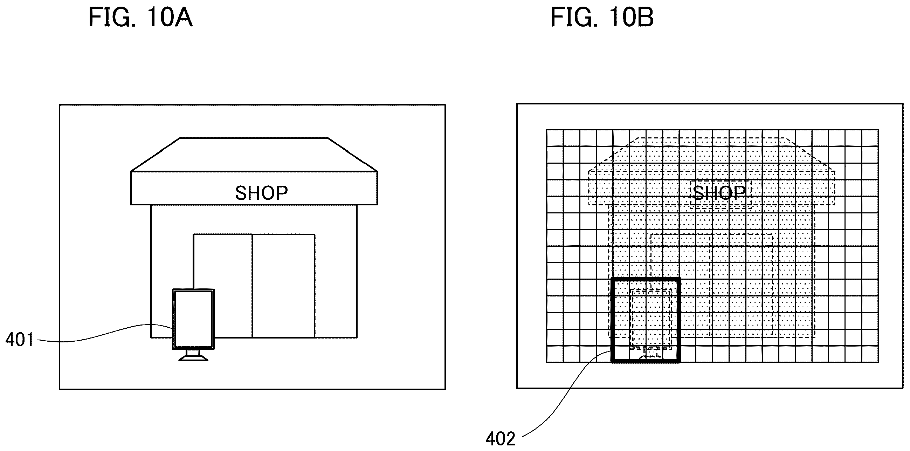

Fig. 10A is a view showing an example of a captured image according to Third Embodiment, and Fig. 10B is an explanatory view of a sensor region according to Third Embodiment. In Fig. 10A, the reference sign 401 indicates digital signage disposed in front of a store.

As described above, an LED light source is often used as digital signage, which is a light source in which change in color tone is likely to occur due to count omissions. The object detection unit detects digital signage from a captured image and identifies its region within the image.

In Fig. 10B, the region detected in Fig. 10A is associated with the position on the sensor. That is, a region, such as a region 402, where count omissions occur is identified. In this Embodiment, in order to restrain count omissions in this region, the control signal CLK for the flashing light source is supplied to each pixel in this region.

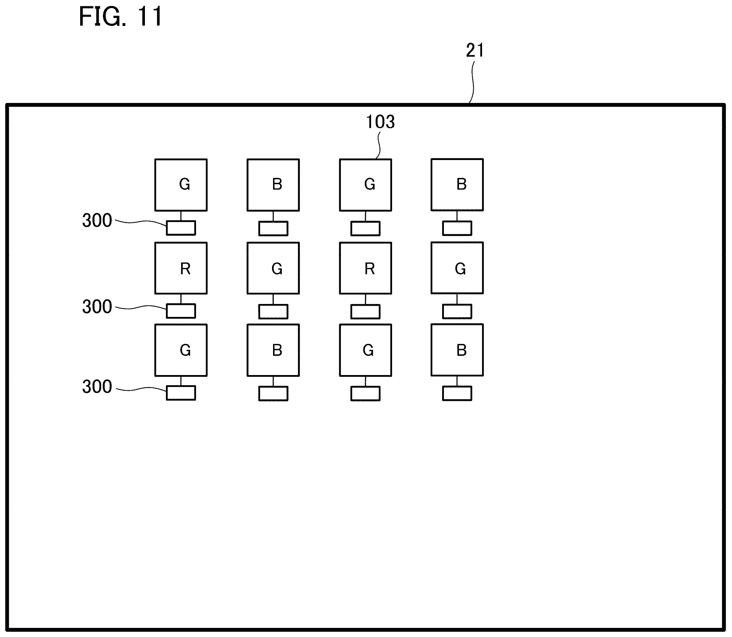

Fig. 11 is a view showing an example of connection between each pixel and a control signal CLK circuit of the photoelectric conversion element according to Third Embodiment. In the example shown in Fig. 11, a control signal CLK circuit 300 is provided for each pixel. That is, the control signal CLK circuit 300 serving as a different signal generation unit is connected for each avalanche photodiode. The control signal CLK circuit 300 of each pixel can independently control the recharge cycle of the pixel.

It is possible to restrain change in color tone in the region of the flashing light source by controlling the recharge cycle for each color of the color filters of the pixels corresponding to the region detected by the object detection unit. The control signal CLK may be input from outside the photoelectric conversion device.

On the other hand, in one embodiment, when an independent control signal CLK circuit is provided in all pixels, many wirings and frequency generators are required. In order to resolve this, the screen may be divided into a plurality of divided regions, and the same control signal CLK circuit may be provided for each divided region.

In addition, for example, in one embodiment, the control signal CLK circuit for each divided region need only include three types of control signal CLK circuits-- one each for the R pixels, the G pixels, and the B pixels, and the configuration and wirings can be significantly reduced by providing a control signal CLK circuit for each pixel region in this manner.

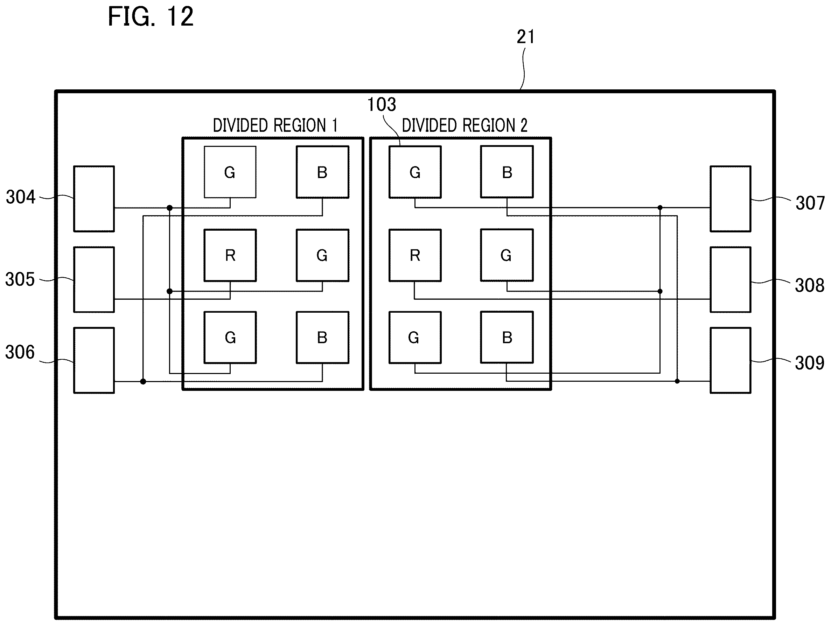

Fig. 12 is a view showing an example of a method for supplying the control signals CLK when the divided region of the photoelectric conversion element according to Third Embodiment is divided into two segments. Control signal CLK circuits 304, 305, and 306 respectively supply the control signals CLK to the G pixels, the R pixels, and the B pixels in a divided region 1.

In addition, control signal CLK circuits 307, 308, and 309 respectively supply the control signals CLK to the G pixels, the R pixels, and the B pixels in a divided region 2. The avalanche photodiodes corresponding to the color filters of green, red, and blue are connected to a common signal generation unit. In this manner, in this Embodiment, a common signal generation unit is connected to a plurality of avalanche photodiodes of the same color within predetermined divided regions, and a plurality of divided regions are provided.

When a part of a captured image has count omissions, the color tone in this portion of the captured image changes. However, it may be difficult to identify which pixels have count omissions based on the image.

Therefore, in one embodiment, when a flashing light source is detected by the object detection unit, count omissions may be restrained and change in color tone may be restrained by shortening the recharge cycle only for the G pixels where change in color tone is likely to occur noticeably.

That is, the recharge cycle of the avalanche photodiodes corresponding to the green color filter may be controlled to be shorter than the recharge cycles of the avalanche photodiodes corresponding to the red and blue color filters.

Alternatively, when a user confirms an image and can confirm an abnormality in color tone of a subject, similar to First Embodiment, change in color tone may be restrained by controlling the recharge cycle of the pixels of a predetermined color of the pixels in the region where an abnormality in color tone has occurred. In this manner, restraint on change in color tone can be realized by the object detection unit detecting whether there is a flashing light source in a subject and by shortening the recharge cycle of the pixels of a predetermined color in accordance with the color of the flashing light source.

<Fourth Embodiment>

The photoelectric conversion device of Fourth Embodiment includes a count omission detection unit detecting whether count omissions have occurred in each pixel. Further, pixels of colors requiring control of the recharge cycle are determined, and change in color tone is restrained based on the detection results of the count omission detection unit.

That is, a count omission detection unit for judging whether count omissions have occurred with respect to the incident photons on the avalanche photodiode is provided. Further, based on the judgment results of the count omission detection unit, the recharge cycle of the avalanche photodiode corresponding to the color of the color filter in which count omissions have occurred is shortened.

The count omission detection unit detects count omissions based on an output of each pixel. The count omission detection unit can acquire the presence or absence of count omissions and color information of the pixels where count omissions have occurred.

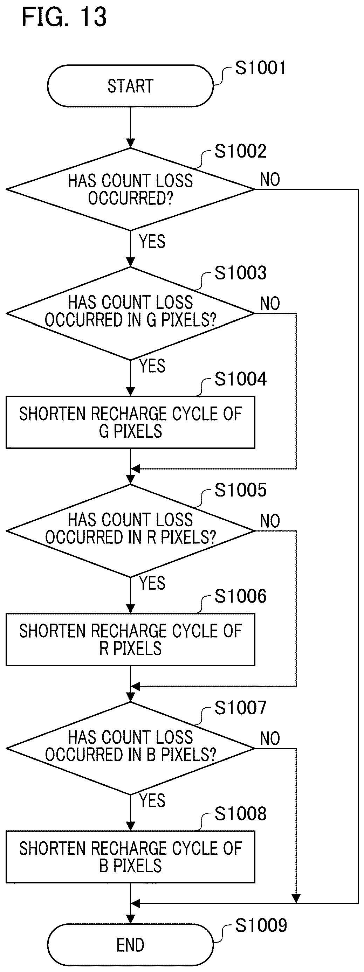

Fig. 13 is a flowchart showing an example of control in the photoelectric conversion method in the photoelectric conversion device according to Fourth Embodiment, and it shows an example of processing performed when a flashing light source such as an LED light source is present as a subject and count omissions have occurred in a pixel.

Operations of respective steps in the flowchart of Fig. 13 are sequentially executed by a CPU or the like serving as a computer in the control unit 801 executing a computer program stored in the memory. In addition, the processing flow shown in Fig. 13 is executed in a cycle on a frame-period basis, for example.

First, the processing flow is started in Step S1001, and in Step S1002, the count omission detection unit detects whether count losses (count omissions) have occurred in each pixel.

When it is judged in Step S1002 that count omissions have occurred, the processing proceeds to Step S1003. When it is judged that no count omissions have occurred, the processing proceeds to Step S1009, and the processing flow of Fig. 13 ends.

In Step S1003, it is judged whether count losses have occurred in the G pixels. That is, it is confirmed whether the pixels where count losses have occurred are the R pixels, the G pixels, or the B pixels. When it is judged that count losses have occurred in the G pixels, it is judged to be Yes, and the processing proceeds to Step S1004. When it is judged to be No in Step S1003, the processing proceeds to Step S1005.

In Step S1004, the recharge cycle of the G pixels is made shorter than the recharge cycle of the R pixels and the B pixels, and the processing proceeds to Step S1005.

Similarly, in Step S1005, it is judged whether count losses have occurred in the R pixels. When it is judged to be Yes, the processing proceeds to Step S1006. When it is judged to be No, the processing proceeds to Step S1007.

In Step S1006, the recharge cycle of the R pixels is made shorter than the recharge cycles of the G pixels and the B pixels, and the processing proceeds to Step S1007.

In Step S1007, it is judged whether count losses have occurred in the B pixels. When it is judged to be Yes, the processing proceeds to Step S1008. When it is judged to be No, the processing proceeds to Step S1009, and the processing flow of Fig. 13 ends.

In Step S1008, the recharge cycle of the B pixels is made shorter than the recharge cycles of the G pixels and the R pixels, the processing proceeds to Step S1009, and the processing flow of Fig. 13 ends. As described above, the processing flow shown in Fig. 13 is executed in a cycle on a frame-period basis, for example. Count omissions can be restrained by executing the processing flow of Fig. 13 in this manner.

That is, in this Embodiment, restraint on change in color tone can be automatically achieved by detecting pixels of a color in which count losses (count omissions) have occurred using the count omission detection unit and shortening the recharge cycle of this color.

<Fifth Embodiment>

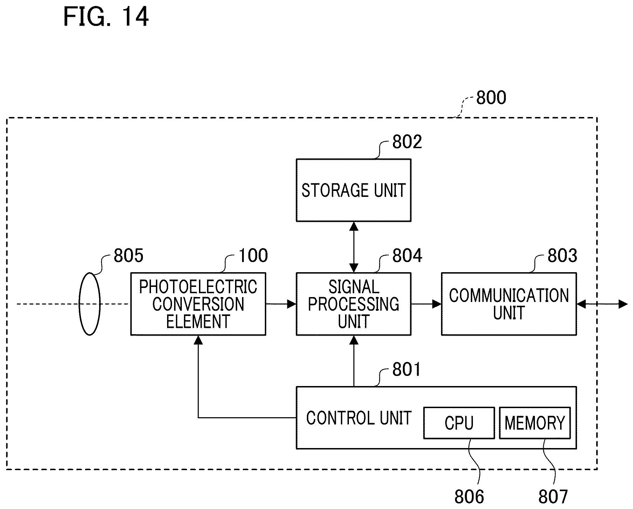

Fig. 14 is a functional block view showing an example of a constitution of the photoelectric conversion element using the photoelectric conversion devices of First Embodiment to Fourth Embodiment. Some of the functional block shown in Fig. 14 are realized by a CPU or the like, which serves as a computer included in the photoelectric conversion device, executing a computer program stored in the memory serving as a storage medium.

However, some or all of them may be realized by hardware. A dedicated circuit (ASIC), a processor (reconfigurable processor, DSP), or the like can be used as the hardware.

In addition, the functional block shown in in Fig. 14 does not have to be built into the same casing and may be constituted of separate devices connected to each other via a signal path. A photoelectric conversion device 800 includes the photoelectric conversion element 100, the control unit 801, a storage unit 802, a communication unit 803, the signal processing unit 804, and an image forming optical system 805.

The photoelectric conversion element 100 captures optical images formed by the image forming optical system 805. Signals read from the photoelectric conversion element 100 are supplied to the signal processing unit 804. The signal processing unit 804 performs processing such as black level correction, gamma curve adjustment, noise reduction, data compression, white balance correction, and color conversion.

In addition, in the signal processing unit 804, using Expression 2 described above, the nonlinearity of the number of output signals Nct of the counter circuit 211 is corrected. Accordingly, a final image is generated. Due to such a constitution, even under an environment where a flashing light source is used as illumination light, it is possible to realize a photoelectric conversion device in which change in color tone can be restrained.

A CPU 806 serving as a computer is built into the control unit 801 and functions as a control means for controlling operations of units of the entire photoelectric conversion device 800 on the basis of the computer program stored in a memory 807 serving as a storage medium.

In addition, the control unit 801 controls the length of the exposure period of each frame of the photoelectric conversion element 100 and the timing of the control signal CLK using pulses supplied from the vertical scanning circuit 110 via the control pulse generation unit 115 of the photoelectric conversion element 100.

In addition, the control unit 801 controls the recharge cycle of the avalanche photodiode corresponding to each color such that they differ for each color. Moreover, the control unit 801 controls the exposure time of the avalanche photodiodes and controls the saturation judgment count number, as described above, to be smaller than the maximum number of times of recharging determined by a quotient obtained by dividing the exposure time by the recharge cycle.

For example, the storage unit 802 includes a recording medium such as a memory card or a hard disk. The communication unit 803 includes a wireless or wired interface, thereby outputting generated images to the outside of the photoelectric conversion device 800 and receives signals from the outside.

While the disclosure has been described with reference to embodiments, it is to be understood that the disclosure is not limited to the disclosed embodiments. The scope of the following claims is to be accorded the broadest interpretation so as to encompass all such modifications and equivalent structures and functions.

In addition, as a part or the whole of the control according to the embodiments, a computer program realizing the function of the embodiments described above may be supplied to the photoelectric conversion device or the like through a network or various storage media. Then, a computer (or a CPU, an MPU, or the like) of the photoelectric conversion device or the like may be configured to read and execute the program. In such a case, the program and the storage medium storing the program configure the disclosure.

In addition, the disclosure includes those realized using at least one processor or circuit configured to perform functions of the embodiments explained above. For example, a plurality of processors may be used for distribution processing to perform functions of the embodiments explained above.

This application claims the benefit of Japanese Patent Application No. 2024-224652, filed on December 20, 2024, which is hereby incorporated by reference herein in its entirety.

## Claims

1. A conversion device comprising:

   conversion elements respectively having avalanche photodiodes that receive light corresponding to respective colors of a plurality of color filters, and counters that count and output a number of output signals from the avalanche photodiodes;
   control unit configured to make recharge cycles of the avalanche photodiodes corresponding to the respective colors different for each color.

2. The conversion device according to claim 1,

   wherein the color filters respectively have colors of red, blue, and green, and
   wherein the control unit makes the recharge cycle of the avalanche photodiode corresponding to the green color filter shorter than the recharge cycles of the avalanche photodiodes corresponding to the red and blue color filters.

3. The conversion device according to claim 1 or 2,

   wherein the color filters include a transparent color filter, and
   wherein the control unit makes the recharge cycle of the avalanche photodiode corresponding to the transparent color filter shorter than the recharge cycles of the avalanche photodiodes corresponding to the other color filters.

**4.** The conversion device according to any one of claims 1 to 3,

wherein the color filters include red and blue color filters and a transparent color filter, and wherein the control unit makes the recharge cycle of the avalanche photodiode corresponding to the transparent color filter shorter than the recharge cycles of the avalanche photodiodes corresponding to the red and blue color filters.

**5.** The conversion device according to any one of claims 1 to 4,
a signal generation unit configured to supply control signals for the respective recharge cycles to the avalanche photodiodes corresponding to the respective colors of the color filters.

**6.** The conversion device according to claim 5,
wherein the avalanche photodiodes corresponding to the color filters of green, red, and blue are connected to a common signal generation unit.

**7.** The conversion device according to claim 5 or 6,
wherein, common signal generation units are each connected to a plurality of the avalanche photodiodes of the same color within predetermined divided regions, and a plurality of the divided regions are provided.

**8.** The conversion device according to any one of claims 1 to 7,
wherein the control unit controls the recharge cycles by masking some of the control signals.

**9.** The conversion device according to any one of claims 1 to 8, further comprising:

a judge unit configured to judge whether there are count omissions with respect to incident photons to the avalanche photodiodes, and the control unit is configured to shorten the recharge cycles of the avalanche photodiodes corresponding to colors of the color filters in which the count omissions have occurred on the basis of a judgment result in detection of the count omissions.

**10.** The conversion device according to any one of claims 1 to 9, further comprising:

a detecting unit configured to detect a flashing light source, and
the control unit is configured to shorten the recharge cycle of the avalanche photodiode corresponding to a predetermined color in a region of the flashing light source.

**11.** The conversion device according to any one of claims 1 to 10,
wherein the control unit is configured to make the recharge cycle of the avalanche photodiode corresponding to one color of the red, green, and blue color filters shorter than the recharge cycles of the avalanche photodiodes corresponding to the other colors.

**12.** The conversion device according to any one of claims 1 to 11,
wherein the control unit is configured to have a first drive mode that shortens the recharge cycle of the avalanche photodiode corresponding to a predetermined color, and a second drive mode that does not shorten the recharge cycle.

**13.** The conversion device according to any one of claims 1 to 12 further comprising:
a switch connected to one node of an anode and a cathode of the avalanche photodiode and a power supply line to which a drive voltage is applied, the switch being configured to control the recharge cycle by switching a resistance value between the one node and the power supply line.

**14.** A conversion method for controlling conversion elements respectively having avalanche photodiodes that receive light corresponding to respective colors of a plurality of color filters, and counters that count and output the number of output signals from the avalanche photodiodes, the method comprising:
making recharge cycles of the avalanche photodiodes corresponding to the respective colors different for each color.

**15.** A computer program for executing a method for controlling
conversion elements respectively having avalanche photodiodes that receive light corresponding to respective colors of a plurality of color filters, and counters that count and output the number of output signals from the avalanche photodiodes, the method comprising:
making recharge cycles of the avalanche photodiodes corresponding to the respective colors different for each color.

FIG. 1

FIG. 2

FIG. 3

EP 4 765 852 A1

# FIG. 4

EP 4 765 852 A1

FIG. 5

EP 4 765 852 A1

FIG. 6

## FIG. 7A

ILLUMINATION
INTENSITY

PHOTONS

R,B

6count

PHOTONS

G

12count

## FIG. 7B

## FIG. 7C

ATTENTION
REGION

LIGHT
SOURCE

ONE FRAME

ILLUMINATION
INTENSITY

EP 4 765 852 A1

# FIG. 8

ILLUMINATION
INTENSITY

PHOTONS

R,B

6count

PHOTONS

G

12count

# FIG. 9

```
        ┌─────────────┐
        │    START    │
        └─────────────┘
               │
               ▼
           ╱S901╲
      ╱─────────────╲
     ╱   IS THERE     ╲      NO
    ╱ FLASHING LIGHT SOURCE IN ╲──────────────────────────────────────────────────────┐
     ╲    SUBJECT?    ╱                                                                 │
      ╲─────────────╱                                                                  │
               │ YES                                                                    │
               ▼                                                                        │
           ╱S902╲                    ╱S904╲                    ╱S906╲                    │
      ╱─────────────╲           ╱─────────────╲           ╱─────────────╲               │
     ╱ IS FLASHING    ╲   NO    ╱ IS FLASHING   ╲   NO    ╱ IS FLASHING   ╲   NO         │
    ╱ LIGHT SOURCE CLOSE TO ╲──────╱ LIGHT SOURCE CLOSE TO ╲──────╱ LIGHT SOURCE CLOSE TO ╲─────┤
     ╲  WHITE OR GREEN? ╱          ╲    RED?      ╱          ╲    BLUE?     ╱               │
      ╲─────────────╱               ╲─────────────╱           ╲─────────────╱               │
               │ YES                          │ YES                    │ YES               │
               ▼ S903                         ▼ S905                   ▼ S907              │
   ┌──────────────────────┐      ┌──────────────────────┐  ┌──────────────────────┐      │
   │ SHORTEN RECHARGE CYCLE OF │  │ SHORTEN RECHARGE CYCLE OF │ │ SHORTEN RECHARGE CYCLE OF │   │
   │       G PIXELS        │      │       R PIXELS        │  │       B PIXELS        │      │
   └──────────────────────┘      └──────────────────────┘  └──────────────────────┘      │
               │                          │                         │                    │
               ◄──────────────────────────┴─────────────────────────┴────────────────────┘
               ▼
        ┌─────────────┐
        │     END     │
        └─────────────┘
```

EP 4 765 852 A1

FIG. 10A

401

FIG. 10B

402

EP 4 765 852 A1

FIG. 11

# FIG. 12

EP 4 765 852 A1

# FIG. 13

```
          ┌─────────────────┐  ⌐S1001
          │      START      │
          └─────────────────┘
                   │
                   ▼
              ╱─────────╲          ⌐S1002
           ╱───────────────╲   NO
          ⟨ HAS COUNT LOSS  ⟩─────────────────┐
           ╲   OCCURRED?   ╱                  │
              ╲─────────╱                     │
                   │ YES                      │
                   ▼                          │
              ╱─────────╲          ⌐S1003     │
           ╱───────────────╲   NO             │
          ⟨ HAS COUNT LOSS  ⟩──────────┐      │
          ⟨OCCURRED IN G PIXELS?⟩       │      │
              ╲─────────╱              │      │
                   │ YES               │      │
                   ▼       ⌐S1004      │      │
          ┌─────────────────┐          │      │
          │SHORTEN RECHARGE │          │      │
          │ CYCLE OF G PIXELS│         │      │
          └─────────────────┘          │      │
                   │◄──────────────────┘      │
                   ▼                          │
              ╱─────────╲          ⌐S1005     │
           ╱───────────────╲   NO             │
          ⟨ HAS COUNT LOSS  ⟩──────────┐      │
          ⟨OCCURRED IN R PIXELS?⟩       │      │
              ╲─────────╱              │      │
                   │ YES               │      │
                   ▼       ⌐S1006      │      │
          ┌─────────────────┐          │      │
          │SHORTEN RECHARGE │          │      │
          │ CYCLE OF R PIXELS│         │      │
          └─────────────────┘          │      │
                   │◄──────────────────┘      │
                   ▼                          │
              ╱─────────╲          ⌐S1007     │
           ╱───────────────╲   NO             │
          ⟨ HAS COUNT LOSS  ⟩──────────┐      │
          ⟨OCCURRED IN B PIXELS?⟩       │      │
              ╲─────────╱              │      │
                   │ YES               │      │
                   ▼       ⌐S1008      │      │
          ┌─────────────────┐          │      │
          │SHORTEN RECHARGE │          │      │
          │ CYCLE OF B PIXELS│         │      │
          └─────────────────┘          │      │
                   │◄──────────────────┴──────┘
                   ▼       ⌐S1009
          ┌─────────────────┐
          │       END       │
          └─────────────────┘
```

FIG. 14

**EUROPEAN SEARCH REPORT**

Application Number

EP 25 22 4221

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y<br>A | EP 4 277 263 A1 (CANON KK [JP])<br>15 November 2023 (2023-11-15)<br>* paragraphs [0013], [0023], [0032], [0038], [0041] *<br>----- | 1-8,<br>11-15<br>9,10 | INV.<br>H04N25/534<br>H04N25/773 |
| Y | WO 99/09737 A1 (INTEL CORP [US])<br>25 February 1999 (1999-02-25)<br>* page 6, paragraph 2 - page 9, paragraph 3 *<br>----- | 1-8,<br>11-15 | |
| A | US 2024/365023 A1 (KAYAMA KAZUYA [JP] ET AL) 31 October 2024 (2024-10-31)<br>* paragraph [0085] - paragraph [0107] *<br>----- | 9,10 | |

**TECHNICAL FIELDS SEARCHED    (IPC)**

H04N

The present search report has been drawn up for all claims

| Place of search | Date of completion of the search | Examiner |
|---|---|---|
| Munich | 18 March 2026 | Penchev, Petyo |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

........................................................................................
& : member of the same patent family, corresponding
    document

EPO FORM 1503 03.82 (P04C01)

## EP 4 765 852 A1

### ANNEX TO THE EUROPEAN SEARCH REPORT
### ON EUROPEAN PATENT APPLICATION NO.

EP 25 22 4221

This annex lists the patent family members relating to the patent documents cited in the above-mentioned European search report.
The members are as contained in the European Patent Office EDP file on
The European Patent Office is in no way liable for these particulars which are merely given for the purpose of information.

18-03-2026

| Patent document cited in search report | | Publication date | Patent family member(s) | | Publication date |
|---|---|---|---|---|---|
| EP 4277263 | A1 | 15-11-2023 | EP | 4277263 A1 | 15-11-2023 |
| | | | JP | 7661212 B2 | 14-04-2025 |
| | | | JP | 2022106660 A | 20-07-2022 |
| | | | JP | 2025092560 A | 19-06-2025 |
| | | | KR | 20230128061 A | 01-09-2023 |
| | | | US | 2023343879 A1 | 26-10-2023 |
| | | | WO | 2022149576 A1 | 14-07-2022 |
| WO 9909737 | A1 | 25-02-1999 | AU | 5457098 A | 08-03-1999 |
| | | | TW | 361042 B | 11-06-1999 |
| | | | WO | 9909737 A1 | 25-02-1999 |
| US 2024365023 | A1 | 31-10-2024 | JP | 2024157144 A | 07-11-2024 |
| | | | US | 12133011 B1 | 29-10-2024 |

EPO FORM P0459

For more details about this annex : see Official Journal of the European Patent Office, No. 12/82

31

**EP 4 765 852 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020123847 A

- JP 2024224652 A